# FASCICULE DE BREVET EUROPEEN

(11) **EP 3 302 797 B1**
(45) Date de publication et mention de la délivrance du brevet: **15.01.2020**
(21) Numéro de dépôt: 16728900.8
(22) Date de dépôt: 03.06.2016
(51) Int. Cl.: B01J 23/94, B01J 35/00, B01J 38/72, B01J 21/04, B01J 23/882, B01J 23/888, B01J 23/883, B01J 23/90, B01J 37/00, G01N 21/71, B07C 5/00, B07C 5/346, B07C 5/36

(54) **PROCEDE DE TRI DE CATALYSEURS OU ADSORBANTS CONTAMINES**
VERFAHREN ZUM SORTIEREN VON KONTAMINIERTEN KATALYSATOREN ODER ADSORPTIONSMITTELN
METHOD FOR SORTING CONTAMINATED CATALYSTS OR ADSORBENTS

(30) Priorité: 05.06.2015 FR 1555167
(43) Date de publication de la demande: 11.04.2018
(73) Titulaire: IFP Energies nouvelles, 92500 Rueil-Malmaison (FR); EURECAT SA., 07800 La Voulte-sur-Rhône (FR)
(72) Inventeur: GAUTHIER, Thierry, 69530 Brignais (FR); LIENEMANN, Charles-Philippe, 38460 Villemoirieu (FR); WEISS, Wilfried, 38540 Valencin (FR); DUFRESNE, Pierre, 26000 Valence (FR); GALLIOU, Pauline, 07800 Saint Laurent du Pape (FR)
(74) Mandataire: IFP Energies nouvelles
(86) Numéro de dépôt international: PCT/EP2016/062724
(87) Numéro de publication internationale: WO 2016/193478

(56) Documents cités:
- WO-A1-2015/082424
- US-A1- 2009 000 992
- Yasmina Tayeb: "Le projet Trisur, lauréat du concours mondial d'innovation", La Tribune, 2 septembre 2014 (2014-09-02), XP055262244, Extrait de l'Internet: URL:http://acteursdeleconomie.latribune.fr /innovation/2014-09-02/le-projet-trisur-la ureat-du-concours-mondial-d-innovation.htm l [extrait le 2016-04-01]
- ASIMELLIS G ET AL: "Platinum group metals bulk analysis in automobile catalyst recycling material by laser-induced breakdown spectroscopy", SPECTROCHIMICA ACTA. PART B: ATOMIC SPECTROSCOPY, NEW YORK, NY, US, US, vol. 63, no. 11, 1 novembre 2008 (2008-11-01), pages 1338-1343, XP025685358, ISSN: 0584-8547, DOI: 10.1016/J.SAB.2008.09.016 [extrait le 2008-10-09]

## Description

L'invention concerne un procédé de séparation (tri) de catalyseur ou adsorbant contaminé.

Plus précisément l'invention concerne un procédé de séparation (tri) d'au moins un catalyseur et/ou d'au moins un adsorbant d'un mélange homogène de catalyseurs et/ou d'adsorbants, les catalyseurs ou les adsorbants contenant après usage des contaminants non métalliques tel que du carbone, du soufre, de l'azote, du chlore, du silicium, du phosphore ou du sodium, ou des contaminants métalliques tels que du nickel, du vanadium, du fer, du mercure ou semi-métalliques comme l'arsenic.

Ces contaminants sont généralement contenus dans les charges traitées par ces catalyseurs ou ces adsorbants, ou peuvent être issus de réactions secondaires comme le cokage. Le procédé et le dispositif de séparation et de tri permettent de séparer des catalyseurs et/ou des adsorbants issus d'un mélange de catalyseurs ou d'adsorbants en fonction de la teneur en contaminants présents sur les catalyseurs ou les adsorbants, le seuil de tri étant défini par l'opérateur.

### Etat de l'art

Dans le brevet US 7886915 un procédé est décrit pour trier en ligne des rebuts métalliques (ferraille, copeaux ferreux et non ferreux). Le système proposé est un système d'analyse en ligne permettant de déterminer la composition chimique des éléments à trier. Dans cette invention, les matériaux à trier sont des pièces métalliques dont la forme et la taille sont variables et non déterminées. Un des objets de l'invention concerne la mise en oeuvre de l'analyse en vrac, chaque particule n'étant pas analysée individuellement. L'application industrielle visée concerne le recyclage des ferrailles, celles-ci étant ensuite fondues dans des fours électriques, il est important pour la qualité de l'acier final d'éliminer au mieux les métaux non ferreux et particulièrement le cuivre.

La demande de brevet US 2013/0073077 A1 concerne un système de tri adapté aux minerais. Les moyens d'analyse associés au tri proposés sont multiples et concernent préférentiellement les techniques de Proche Infrarouge (NIR) ou le LIBS (Laser Induced Breakdown Spectroscopy), les rayons X ou des détecteurs magnétiques.

Là encore, il s'agit de particules de taille non définies, le minerai à trier résultant d'un processus de broyage ou de concassage initial. Un minerai contient des éléments métalliques qui sont mélangés à de la roche dont les formes cristallines et la composition chimique peuvent varier. La concentration en métaux est variable d'une particule à l'autre. Dans ce type d'application, on cherche en général à trier les particules pour garder celles dont la composition en élément métallique recherché est la plus importante.

La demande de brevet WO2013/013276 A1 décrit également un système de tri adapté aux minerais dans un contexte similaire à la demande de brevet US 2013/0073077 A1. La forme et la taille des éléments à trier est variable, leur composition également puisqu'il s'agit de minerai. Un arrangement des particules sur le tapis roulant est revendiqué pour permettre la capacité de tri des particules. On propose en particulier de contrôler l'espacement entre les différentes particules sur le tapis roulant de la chaine de tri. De manière préférée, un système d'arrangement en rangées transversales à la direction de l'écoulement sur le tapis est proposé.

Enfin, dans la demande WO2012/168938 A1, un système de tri est proposé, là encore appliqué préférentiellement au tri de minerai, avec un aspect quantitatif fort permettant de fixer un seuil de rejet sur la base d'une teneur minimale en l'un des éléments recherchés. Les moyens de détection en ligne sont à base de deux lasers et un système de double impulsion permet une lecture en absorption différente de la lecture en émission classiquement utilisée en technique LIBS.

La demande de brevet US 2013/264249 décrit un procédé pour le tri des objets contenant des matériaux recyclables par fluorescence X. La taille de la zone analysée est de l'ordre de plusieurs cm.

Toutes ces techniques ont été développées dans le cadre de la mine avec des tris grossiers. Les tris sur les catalyseurs nécessitent une approche plus précise pour assurer la récupération maximale de métaux, étant donné le coût élevé des catalyseurs et la valeur ajoutée potentielle.

Le brevet EP-2008726 propose un tri des catalyseurs usés selon la couleur de leur surface, plus ou moins grise.

La présente invention permet d'accroître la réutilisation des catalyseurs ou adsorbants dans les procédés et ainsi de limiter les quantités destinées au recyclage ultime, le recyclage ultime étant un procédé destructif permettant de récupérer au moins en partie les constituants valorisables contenus dans les catalyseurs ou adsorbants.

Les catalyseurs et adsorbants utilisés dans l'industrie, notamment l'industrie chimique, les industries de production et de raffinage des hydrocarbures (gaz, pétrole), les procédés de traitement de biomasse et/ou de charbon, sont souvent exposés à la présence de nombreux contaminants présents dans les charges à traiter et qui se déposent sur le catalyseur ou sur l'adsorbant dans les réacteurs ou adsorbeurs. Ces contaminants sont de natures différentes. Après interaction entre la charge et le catalyseur ou l'adsorbant, ces contaminants vont se déposer sur le solide ce qui conduit à une détérioration progressive des propriétés catalytiques du catalyseur ou des propriétés de séparation de l'adsorbant.

On notera que les contaminants sont différents des éléments constitutifs du catalyseur ou de l'adsorbant, même si dans certains cas il s'agit du même élément chimique. En effet, les éléments constitutifs sont partie intégrante du catalyseur ou de l'adsorbant. Ils sont amenés lors de la fabrication et participent à l'activité catalytique du catalyseur ou à la sélectivité de l'adsorbant.

Parmi les contaminants non métalliques fréquemment rencontrés, on trouve par exemple C, S, N, Cl, P et Na. Parmi les contaminants métalliques fréquemment rencontrés, on trouve par exemple Ni, V, Fe, Hg, et parmi les contaminants semi-métalliques on trouve le plus souvent As.

Les teneurs en contaminants déposés sur le catalyseur ou sur l'adsorbant sont variables. Elles peuvent varier dans un même lit catalytique en fonction de la hauteur dans le réacteur ou de la position radiale. Ces gradients importants sont en général observés, plus ou moins marqués en fonction de la cinétique de décomposition des molécules contenant ces éléments.

Lors du déchargement, on se trouve alors en présence de mélange de catalyseurs ou d'adsorbants ayant différentes teneurs en contaminants.

Des traitements permettent d'éliminer certains contaminants comme le carbone et le soufre sans pour autant éliminer d'autres contaminants comme par exemple Ni, V, Fe, As, Na, P.

De ce fait, les procédés de traitement des catalyseurs et adsorbants usés pour éliminer au moins en partie lesdits contaminants concernent des teneurs en contaminants très variables et dès lors, les catalyseurs ou adsorbants peuvent encore se retrouver, à l'issue du traitement (par exemple la régénération), avec des contaminants et en teneurs variables. Il fallait donc améliorer la qualité des catalyseurs ou adsorbants obtenus. On a donc recherché un procédé de séparation des catalyseurs ou adsorbants selon la nature et la teneur en contaminants.

Il était possible de faire le tri sur les catalyseurs ou adsorbants à l'issue des traitements possibles pour éliminer les contaminants. Le déposant n'a pas choisi cette voie. En faisant le tri sur des catalyseurs en fonction de la présence/teneur en contaminants en amont du procédé de traitement, les quantités de catalyseur à traiter sont limitées.

Par ailleurs, l'invention est particulièrement intéressante en ce que le procédé de traitement peut alors être adapté à la teneur en contaminants du lot de catalyseur ou adsorbant à traiter. En d'autres termes, le procédé est conçu pour trier les catalyseurs ou adsorbants en fonction de la teneur en contaminants et séparer les catalyseurs et adsorbants selon des teneurs prédéterminées, notamment en fonction des procédés de traitement envisagés ou en fonction des contraintes de réutilisation des catalyseurs dans les procédés industriels.

Dès lors, les catalyseurs ou adsorbants faiblement chargés en contaminants sont réutilisés dans un procédé industriel (par exemple un nouveau cycle) après éventuellement un ou plusieurs traitements (par exemple une régénération). Les catalyseurs ou adsorbants trop fortement chargés sont dirigés en recyclage ultime récupérer les constituants valorisables.

Dans le cas d'une réutilisation, ces solides peuvent être soumis, selon leur teneur en contaminants, à des traitements appropriés en vue de leur réutilisation en unité industrielle (régénération, réjuvénation, lixiviation des métaux, etc.). Selon une définition commune (Dictionary of scientific and technical terms, Mc Graw-Hill), la lixiviation est la dissolution par un solvant liquide d'un matériel (ici un métal) soluble contenu dans un mélange avec un solide insoluble.

De même, lorsque ces solides sont envoyés au recyclage ultime, les traitements appropriés peuvent être choisis en fonction de leur teneur en contaminant : par exemple un traitement de type pyrométallurgique ou hydrométallurgique.

On entend par « régénération » les procédés visant à éliminer le coke déposé sur les catalyseurs ou adsorbants usés de façon à ce que le catalyseur retrouve une activité ou l'adsorbant une sélectivité. Ces procédés sont bien connus de l'homme du métier. Ce sont généralement des procédés de combustion contrôlée.

On entend par « réjuvénation » les procédés visant à restaurer une activité et appliqués à des catalyseurs généralement régénérés. Là encore, de tels procédés sont connus de l'homme du métier. Ce sont généralement des procédés avec introduction de molécule(s) organique(s) particulière(s) sur le catalyseur.

On entend par « traitement de type pyrométallurgique ou hydrométallurgique » les procédés visant à séparer les différents métaux dans un but de valorisation. Ces procédés sont bien connus de l'homme du métier.

Il a donc été recherché un procédé pour séparer ces catalyseurs et adsorbants en fonction de la présence ou non de contaminant(s), et très avantageusement en fonction de la teneur en contaminant(s).

L'invention concerne un procédé de séparation selon la revendication 1 d'au moins un catalyseur et/ou adsorbant d'un mélange homogène de catalyseurs ou d'adsorbants, lesdits catalyseurs ou adsorbants contenant un ou des contaminant(s) métallique(s), semi-métallique(s) ou non métallique(s) déposé(s) sur lesdits grains de catalyseurs ou adsorbants, procédé dans lequel les grains de catalyseurs ou adsorbants sont séparés selon un seuil de tri correspondant à une teneur en contaminant et défini par l'exploitant, procédé dans lequel
- les grains de catalyseur dudit mélange passent devant un système de détection LIBS qui détecte la longueur d'onde caractérisant ledit contaminant,
- l'analyseur associé au LIBS traite le signal envoyé par le système de détection en le comparant à une valeur consigne significative du seuil de tri,
- l'analyseur envoie un signal pour commander l'évacuation des grains selon sa teneur en contaminant et il est obtenu au moins 2 lots, au moins un lot de catalyseurs ou adsorbants fortement chargés en ledit contaminant par rapport au seuil de tri et au moins un lot de catalyseurs ou adsorbants peu chargés en ledit contaminant par rapport au seuil de tri.

Le système de détection détecte donc la présence ou non du contaminant et également sa teneur.

Le procédé est particulièrement adapté aux catalyseurs ou adsorbants à séparer contenant au moins l'un des contaminants Fe, Hg, Ni, V, C, Cl, Na, S, N, Si, P, As.

Par exemple, il est possible après tri d'envoyer un lot fortement contaminé en vanadium au recyclage ultime de manière à récupérer au moins en partie les matières valorisables. Le lot faiblement contaminé en vanadium peut être envoyé sur un procédé de régénération en vue d'éliminer le coke et de le réutiliser dans un procédé de raffinage.

Ainsi, les catalyseurs ou adsorbants faiblement chargés peuvent être séparés des catalyseurs ou adsorbants plus fortement chargés, le seuil de séparation (tri) étant fixé par l'opérateur.

Dans le cas de la séparation de catalyseurs ou adsorbants contaminés par le sodium, il est particulièrement intéressant de séparer les catalyseurs ou adsorbants contenant moins de 0.3% pds en Na (seuil de séparation) ; ils sont avantageusement réutilisés après un éventuel traitement tel qu'une régénération, une réjuvénation ou une lixiviation.

Dans le cas de la séparation de catalyseurs contaminés par le vanadium, il est particulièrement intéressant de séparer les catalyseurs contenant peu de V, par exemple moins de 2% pds (seuil de séparation) en V ; ils sont avantageusement réutilisés (par exemple dans les procédés de raffinage) après un éventuel traitement tel qu'une régénération, une réjuvénation ou une lixiviation, et de préférence une régénération.

Dans le cas de la séparation de catalyseurs contaminés par le vanadium, il peut aussi être intéressant de séparer les catalyseurs contenant beaucoup de V, par exemple 12% pds (seuil de séparation) ou plus en V, ceux-ci étant traités en recyclage ultime pour récupérer au moins en partie les éléments valorisables.

Dans le cas de la séparation de catalyseurs ou d'adsorbants contaminés par du soufre, il est particulièrement intéressant de séparer les catalyseurs contenant par exemple moins de 2% pds (seuil de séparation) en S ; ils sont avantageusement réutilisés après un éventuel traitement thermique sous atmosphère contrôlée, contenant par exemple de l'oxygène pour éliminer du carbone, puis par exemple de l'hydrogène pour restaurer une phase métallique réduite.

Ce cas se présente notamment dans les lits de garde d'unité de reformage catalytique de naphta ou d'isomérisation d'essence légère, également appelés communément « pièges à soufre » (car ces catalyseurs ou adsorbants sont contaminés par le soufre).

Dans le cas de la séparation d'adsorbants contaminés à l'arsenic il est particulièrement intéressant de séparer les catalyseurs contenant par exemple moins de 1% pds (seuil de séparation) en As ; ils sont avantageusement réutilisés après un éventuel traitement tel qu'une régénération, une réjuvénation ou une lixiviation.

Les contaminants résultant de l'utilisation des catalyseurs ou adsorbants au contact de charges hydrocarbonées, le procédé concerne le traitement de catalyseurs et d'adsorbants usés.

Le procédé peut aussi s'appliquer aux catalyseurs ou adsorbants régénérés. En effet, les procédés de régénération thermiques sont efficaces pour certains contaminants comme le carbone et le soufre mais sont généralement inefficaces pour certains contaminants comme le vanadium, le fer ou le nickel.

L'invention est particulièrement adaptée au contexte du tri des catalyseurs d'hydrotraitement, d'hydrocraquage ou d'hydroconversion après usage, une fois déchargés des installations, de forme extrudée de type cylindriques, trilobes ou multilobes. L'invention est également applicable à tout type de billes ou d'extrudés utilisés comme catalyseurs ou adsorbants dans des procédés traitant des charges hydrocarbonées issues de ressources fossiles (pétrole, gaz, charbon) ou renouvelables (biomasse).

Selon l'invention, le temps de passage d'un grain devant le système de détection LIBS est inférieur à 50ms, et de préférence inférieur à 10ms.

Le procédé selon l'invention permet de détecter et de trier un nombre de grains supérieur à 20 grains par seconde, de préférence de 20-100 grains/s ou 50-100 grains/s, et même supérieur à 100 grains/s et pouvant aller jusqu'à 1000 grains par seconde ou plus.

De façon préférée, les grains s'écoulent de façon à ce que leur espacement soit compris entre zéro et leur plus grande dimension caractéristique, la fréquence de mesure est comprise entre 1/t et 1/2t, t étant le temps de passage du grain devant le système de détection LIBS.

Avantageusement, l'espacement entre les grains est au maximum égale à leur plus grande dimension caractéristique. Cela permet de maximiser pour la quantité de matière traitée pour une vitesse d'écoulement des grains donnée

Avantageusement, le système de détection est placé de façon à ce que la profondeur du champ d'analyse au-dessus de la surface des moyens de transport soit comprise entre 1/3 et 3 fois la plus petite dimension caractéristique du grain.

L'objet de l'invention est de proposer, pour des catalyseurs, qui sont des objets de forme homogène et bien définie (extrudés cylindriques, trilobes ou multilobes, billes), un procédé de tri s'appuyant sur le moyen de détection très rapide en ligne LIBS.

### Les catalyseurs ou adsorbants

Les catalyseurs / adsorbants sont des objets bien définis en forme, en taille et en composition. Leur mélange est séparable selon l'invention lorsque ce mélange est homogène, et bien évidemment lorsque il y a une différence au niveau de(s) contaminant(s) (présence ou non, teneur) et que cette différence est détectable par LIBS.

Par ailleurs, certains contaminants comme Ni peuvent se retrouver par exemple sur des catalyseurs contenant Ni. La différenciation se fait par la teneur : le Ni du catalyseur étant à des teneurs plus élevées que Ni contaminant, le seuil de tri est choisi de façon à assurer la séparation.

La longueur des extrudés présente une certaine distribution autour d'une valeur moyenne, ceci étant due à une certaine variabilité de longueur lors de la production des catalyseurs ou adsorbants, mais aussi à des phénomènes d'attrition et de casse des extrudés qui ont pour effet une certaine réduction de longueur. Dans la suite du texte, on appellera plus grande dimension caractéristique la longueur moyenne des extrudés.

Par plus petite dimension caractéristique d'une particule, on entend le diamètre pour une bille ou un extrudé cylindrique, ou encore le diamètre circonscrit tangent aux sommets des lobes pour un trilobe ou un multilobe. D'une manière générale, le terme diamètre sera utilisé dans l'ensemble du texte comme étant la plus petite dimension caractéristique quel que soit le type de particule.

Le diamètre des particules (ou grains) est en général bien défini et sa dispersion est en général faible par rapport à sa valeur moyenne.

### Le mélange homogène

Selon l'invention, les catalyseurs ou adsorbants à trier se présentent sous forme d'un mélange homogène.

On entend par « mélange homogène » un mélange dans lequel les catalyseurs ou adsorbants présentent une taille homogène et/ou une forme homogène.

« Taille homogène » signifie que les plus petites dimensions caractéristiques (appelées aussi diamètres) sont très proches.

En général, le catalyseur présente une forme de billes ou d'extrudés cylindriques, trilobes ou quadrilobes ou multilobes de diamètre souvent compris entre 0.5 et 3 mm (souvent voisin de 0.9-1.5mm) et de longueur égale à 2 à 5 fois le diamètre des extrudés. Il peut être mis en forme sous forme de billes de 0.5 à 10 mm, préférentiellement comprises entre 0.5 et 5 mm de diamètre, ou de pastilles. Les catalyseurs peuvent aussi être utilisés sous la forme de poudres dispersées, dont le diamètre est en général inférieur à 200 microns, mais cette mise en forme ne concerne pas l'objet de l'invention.

Il est à noter que ces formes présentent parfois des défauts inhérents au mode de production. Par exemple, des extrudés sont parfois légèrement courbés sur la longueur. Ces défauts sont acceptables dans la mise en œuvre du procédé selon l'invention.

Ce mélange homogène a pu être obtenu à l'issue d'une étape préalable de séparation (pré-tri) basée sur les propriétés physiques. Ce tri peut être opéré sur des catalyseurs ayant des grains de diamètre analogue, mais pour lequel on voudra éliminer les particules trop courtes, lesquelles ne sont pas réutilisables, et qu'il convient d'éliminer avant le tri compositionnel. Ce pré-tri peut s'effectuer, par exemple, par tamisage ou autre technique connue de l'homme du métier pour séparer des solides par leur taille, ou tout autre méthode de tri (tri par densité...).

Ce pré-tri est intéressant par exemple pour séparer les éléments chargés en tête de réacteur, dits éléments de la couche de garde, ou du lit de garde. Ces éléments sont souvent mélangés lors d'un déchargement avec les catalyseurs situés dans les couches inférieures. Ces éléments peuvent être des billes, des anneaux, des extrudés, des pastilles, contenant ou non des éléments catalytiques. Ils doivent être séparés avant que les catalyseurs valorisables ne soient soumis au système de tri compositionnel avec détection LIBS.

Ce pré-tri est également intéressant dans le cas de catalyseurs de forme différente (par exemple cylindrique ou multilobée) ayant des diamètres différents, par exemple un mélange de 1,5mm et 3mm. Les techniques classiques de séparation mécanique, le tamisage par exemple, peuvent être mises en œuvre pour recouvrer chaque produit.

Il peut aussi arriver que dans un même réacteur soient chargés deux catalyseurs de même forme et dimension mais de composition différente. Dans ce cas, l'invention permet de résoudre le problème posé par la récupération sélective de l'un ou plusieurs des composants du mélange.

### Les constituants du catalyseur

Le support des catalyseurs et des adsorbants est généralement à base d'alumine ou de silice-alumine ou d'oxyde de titane avec présence éventuelle de zéolite, notamment pour les catalyseurs d'hydrocraquage, d'hydroconversion des distillats ou d'hydrotraitement. Plus rarement, le support peut être constitué de charbons actifs.

Les catalyseurs contiennent des éléments constitutifs (métaux) qui confèrent au catalyseur les propriétés catalytiques requises pour traiter certains flux gazeux ou les coupes pétrolières. Ces métaux sont par exemple Ni, Mo, Co, W notamment pour les catalyseurs d'hydrotraitement et d'hydroconversion, tels que Pd et le Pt, notamment dans des procédés d'hydrogénation, de déshydrogénation, d'isomérisation, de reformage, d'hydroconversion.

Ces métaux nobles sont très sensibles aux contaminants, notamment le soufre, et sont généralement placés en aval d'étape d'hydrotraitement. Des adsorbants peuvent aussi contenir des métaux constitutifs sur le support, c'est par exemple le cas des pièges à soufre.

Des adsorbants peuvent aussi ne pas contenir de métaux constitutifs sur le support, c'est par exemple le cas de charbons actifs utilisés en démercurisation.

La phase active des catalyseurs d'hydrotraitement et d'hydrocraquage contient des sulfures de cobalt, de nickel, de molybdène ou de tungstène, lesquels sont supportés, généralement sur alumine. Le catalyseur neuf est initialement préparé avec des oxydes de ces métaux qui sont ensuite sulfurés. On retrouve en fonction des objectifs de réaction en général les combinaisons CoMo, NiMo, NiCoMo ou NiW. La composition initiale en oxyde de nickel ou de cobalt étant en général comprise entre 2 et 10% poids, de préférence d'au moins 3,5%, sur le catalyseur et la composition en molybdène et en tungstène étant voisine de 15 à 30% poids.

### Les contaminants

Les catalyseurs ou adsorbants concernés sont les catalyseurs ou adsorbants utilisés dans l'industrie, notamment l'industrie chimique, les industries de production et de raffinage des hydrocarbures (gaz, pétrole), les procédés de traitement de biomasse et/ou de charbon. Le procédé de la présente invention est donc particulièrement adapté pour traiter des catalyseurs d'hydrotraitement, d'hydrocraquage, d'hydroconversion de distillats ou de résidus pétroliers, mais aussi de procédés de prétraitement ou de purification de coupes hydrocarbonées (lit de garde de désulfuration en amont de reformage catalytique, démercurisation....), la liste étant non exhaustive.

D'une manière générale, les procédés concernés sont caractérisés par le fait qu'ils traitent une charge hydrocarbonée contenant un ou plusieurs contaminants qui peut se déposer sur l'adsorbant ou le catalyseur mis en œuvre dans le procédé.

Le dépôt de ce contaminant peut être le résultat d'une réaction recherchée, par exemple un dépôt de vanadium lors de l'hydrotraitement de résidus, ou encore être le fruit d'une réaction secondaire non désirée, par exemple le dépôt de carbone ou coke ou d'arsenic.

Les contaminants qui se sont déposés au cours de l'opération, sont le plus souvent du carbone, du soufre et de l'azote, du chlore, du silicium, du phosphore ou du sodium pour les contaminants non métalliques, du Ni, du V, du Fe, du Hg pour les contaminants métalliques, ou de l'As pour les contaminants semi-métalliques, en fonction des coupes traitées et de l'origine des bruts raffinés. Il s'agit là des contaminants les plus connus, la présente invention étant applicable à tout type de contaminant.

La quantité des contaminants sur les catalyseurs n'est pas limitative pour la mise en œuvre de l'invention, dans la mesure où il est détectable par la technique LIBS.

Le problème de la séparation est particulièrement crucial pour le vanadium.

La teneur en vanadium des catalyseurs est fonction de la position de chaque grain dans le réacteur, de la durée de cycle, de la teneur en vanadium de la charge traitée et des conditions opératoires. Le V contenu dans les coupes distillats ou résidus traitées dans ces procédés est présent à des teneurs qui varient en fonction de la nature des bruts et de la coupe pétrolière considérée. Ainsi, dans un procédé de prétraitement de charge de craquage catalytique (FCC), la teneur en V de la charge peut être par exemple voisine de 1 à 10 ppm alors qu'elle peut atteindre 100-300 ppm voir plus dans certains résidus. De ce fait, la teneur en V des catalyseurs usés peut aller en fonction des procédés d'une fraction de pourcent à environ 100% du poids du catalyseur neuf.

### La détection par technique LIBS

Le LIBS permet de bien focaliser et de localiser la détection pour la rendre plus efficace.

C'est une technique d'analyse élémentaire (ou compositionnelle), de plus en plus utilisée pour l'analyse directe des solides et des liquides. L'intérêt croissant pour cette technique provient de ses nombreux avantages incluant dans la cas présent une analyse possible in-situ sans préparation particulière d'échantillons, une analyse rapide in-situ, une simplicité d'utilisation et une focalisation précise.

Le principe repose sur la focalisation d'une impulsion laser à la surface de l'échantillon. Cette focalisation d'impulsions laser de quelques nanosecondes, voire femto secondes, et d'une énergie de l'ordre de quelques dizaines de milli joules vers le point à analyser sur le matériau provoque la formation d'un micro-plasma. Ce micro-plasma se nourrit de la composition de la surface de l'échantillon, qui génère la vaporisation et l'ionisation de la matière, puis se refroidit au cours du temps.

La taille du point d'analyse est habituellement de l'ordre de quelques microns, voire la dizaine de microns. Les atomes et les ions du matériau présent dans le micro-plasma, émettent en se désexcitant des photons dont la longueur d'onde est caractéristique de l'élément chimique. Un spectromètre dans le domaine UV/visible collecte, éventuellement à l'aide d'une fibre optique, et traduit la lumière émise par le plasma. Les raies d'émission, générées par l'échantillon analysé, permettent d'identifier les éléments présents dans l'échantillon (analyse qualitative) et donc de connaître les espèces chimiques qui composaient l'échantillon. Leur intensité peut également être mesurée et comparée à celle mesurée pour une gamme d'échantillons de concentration connue, afin de mesurer la composition élémentaire de l'échantillon (analyse quantitative).

Dans le cas de la présente invention, une analyse quantitative permet de mesurer la teneur en contaminant sur le catalyseur ou l'adsorbant à séparer, par exemple la teneur en sodium sur un catalyseur d'hydrotraitement.

La rapidité de réponse du LIBS est un avantage déterminant pour la productivité du tri avec des objets de petite taille comme les catalyseurs.

Les grains de catalyseur ou d'adsorbant sont soumis à un rayonnement laser. En retour, dans un analyseur, l'émission associée est analysée par spectroscopie à une longueur d'onde choisie pour permettre la détection du contaminant sur le catalyseur ou l'adsorbant en mesurant l'intensité du (des) pic relatif à ce contaminant.

Pour ce faire, l'analyseur associé au LIBS traite le signal envoyé par le système de détection en le comparant à une valeur consigne significative de la présence du contaminant, et également significative du seuil de tri.

Le seuil de tri peut correspondre à 0%pds et dès lors la présence ou non de l'élément constitutif recherché est détectée et le tri s'effectue sur cette présence ou non, 0% correspond à la limite de détection du LIBS pour l'élément considéré.

Le seuil de tri peut correspondre à une teneur différente de 0%, choisie par l'exploitant selon l'élément recherché et les contraintes/objectifs de l'exploitant. Le seuil de l'élément est choisi de façon à permettre la séparation de l'élément à partir du mélange.

Les longueurs d'onde associées au contaminant sont connues de l'homme du métier, ainsi que les interférences possibles avec d'autres éléments.

Par exemple, pour le sodium, de nombreuses raies d'émission atomique située entre λ = 588 et 590 nm ou entre λ = 818 et 820 nm par exemple. Préférentiellement, les raies à une longueur d'onde de 588.995 ou 589.592 nm sont utilisées pour leur intensité importante et leur absence d'interférence avec les éléments constitutifs du catalyseur d'hydrotraitement Co, Ni, Mo, W, Al et Si. Alternativement, les raies à une longueur d'onde de 818.326 ou 819.482 nm sont utilisées seules ou en combinaison avec n'importe quelle autre raie du spectre, constitutive de l'échantillon. Le Na est particulièrement émissif et des mesures de teneur sur les grains de catalyseur sont envisageables jusqu'à des teneurs aussi faibles que 0.05%, ce qui permet de trier les catalyseurs en fonction d'une valeur seuil de tri choisie par l'exploitant dans l'intervalle compris entre 0.1 et 1% pds en Na.

Dans le cas du soufre contaminant déposé sur un catalyseur (qui contient par exemple du nickel en lit de garde du reformer), la valeur seuil de tri choisie par l'exploitant dans l'intervalle est en général comprise entre 1 et 3% pds en S. La longueur d'onde est comprise entre λ = 920 et 925 nm ou entre λ = 180 et 183 nm par exemple. Préférentiellement, les raies à une longueur d'onde de 921.287 ou 922.809 nm sont utilisées pour leur intensité importante ; elles sont aussi utilisées pour leur absence d'interférence avec les éléments constitutifs du catalyseur de reforming. Alternativement, les raies à une longueur d'onde de 180.731, 182.034 ou 182.625 nm sont utilisées seules ou en combinaison avec n'importe quelle autre raie du spectre, constitutive de l'échantillon.

Dans le cas du vanadium contaminant déposé sur un catalyseur d'hydrotraitement ou d'hydroconversion de résidu, la valeur seuil de tri choisie par l'exploitant dans l'intervalle peut être comprise entre 1 et 2% pds V pour trier les catalyseurs qui sont réutilisables. La longueur d'onde est comprise entre λ = 600 et 620 nm ou entre λ = 384 et 390 nm ou encore à 309-311 par exemple. Préférentiellement, une combinaison de 5 raies entre 600 et 620 en combinaison avec n'importe quelle autre raie du spectre, constitutive de l'échantillon est utilisée pour l'efficacité de détection du vanadium au sein d'un catalyseur d'hydrotraitement ou d'hydroconversion. Il est également envisageable de choisir une valeur seuil de tri aux alentours de 12% de V afin de trier les catalyseurs qui seront ensuite dirigés vers le recyclage et la récupération du vanadium.

Dans le cas de l'arsenic contaminant déposé sur un catalyseur d'hydrotraitement, la valeur seuil de tri choisie par l'exploitant est par exemple de 1% pds As ; la longueur d'onde est entre λ = 189.042 nm ou 278.022 nm ou encore entre λ = 244 et 246 nm. Préférentiellement, les raies à une longueur d'onde de 278.022 nm ou 189.042 nm sont utilisées seules ou en combinaison avec n'importe quelle autre raie du spectre, constitutive de l'échantillon.

Il faut souligner que les seuils indiqués ci-dessus sont indicatifs et qu'il est naturellement possible d'avoir des valeurs plus élevées en fonction des contraintes de tri souhaitées par l'opérateur.

Afin d'améliorer la sensibilité de détection, il est possible de faire une analyse à plusieurs longueurs d'onde, en utilisant par exemple plusieurs spectromètres couplés sur le même faisceau lumineux et opérant en parallèle.

Le système de détection est préférentiellement ajusté de façon à ce que la profondeur de champ de l'analyse au-dessus de la surface des moyens de transport soit comprise entre 1/3 et 3 fois la plus petite dimension caractéristique du grain de catalyseur (le diamètre de l'extrudé dans le cas d'une particule sensiblement cylindrique, le diamètre du grain dans le cas d'une particule sphérique) pour permettre une détection ultrarapide de la composition des grains.

En pratique, l'analyseur permet de restituer la composition dans l'élément recherché avec un temps de réponse t inférieur à 50 ms, préférentiellement moins de 10 ms.

Le temps de passage d'un grain devant le système de détection est inférieur à 50 ms, et de préférence inférieur à 10 ms et peut aller jusqu'à moins de 1ms. Le nombre de grains détectés est supérieur à 100 grains/s pour un temps de détection inférieur à 10ms et peut atteindre 1000 grains/s pour un temps de d'analyse inférieur à 10ms.

Dans une forme préférée de l'invention, les grains de catalyseur sont espacés, de préférence régulièrement, d'une distance correspondant de préférence à la plus grande dimension caractéristique des grains de catalyseur, soit la longueur moyenne des grains de catalyseur.

La mesure /détection est répétée à intervalle de temps.

Lorsque les grains sont espacés de leur longueur moyenne, la fréquence de mesure est égale à 1/2t, t étant le temps de passage du grain devant le système de détection. Lorsque les grains s'écoulent de façon jointive (les grains sont jointifs, leur espacement est égal à zéro), la fréquence est égale à 1/t.

D'une façon plus générale, les grains, de préférence des extrudés cylindriques ou multilobes, s'écoulent de façon à ce que leur espacement soit compris entre zéro et leur longueur, la fréquence de mesure est comprise entre 1/t et 1/2t, t étant le temps de passage du grain devant le système de détection LIBS.

L'espacement entre les grains est contrôlé par les moyens réglés en fonction du temps de détection du système de détection LIBS.

Par exemple ce sont les moyens de contrôle de l'alimentation (débit d'écoulement) des grains de catalyseurs sur le moyen de transport (bande de roulement, tapis vibrant, etc.) et de la vitesse dudit moyen.

D'une façon générale, les conditions du procédé sont réglées de façon à ce qu'il soit traité un nombre de grains supérieur à 20 grains par seconde pouvant aller jusqu'à 1000 grains par seconde et par détecteur LIBS et que le temps de réponse du système de détection LIBS soit inférieur à 50 ms, préférentiellement moins de 10 ms.

De manière optionnelle, la présence des grains peut être détectée à l'aide d'un autre dispositif optique, par exemple une caméra, de manière à ce que le déclenchement du laser du système LIBS soit synchronisé avec le passage du grain sous le faisceau du laser.

Dans un mode préféré de réalisation de l'invention, chaque grain de catalyseur est exposé au système de détection.

Dans un mode de réalisation préféré de l'invention, il est alors possible de traiter au moins 20 grains par seconde avec le même appareil de mesure, par exemple de 20-100 grains/s, préférentiellement plus de 100 grains par seconde, et jusqu'à 1000 grains par seconde ou plus.

Il est également possible d'avoir plusieurs systèmes de détection en parallèle pour opérer à des cadences élevées. Ainsi l'utilisation de 5 systèmes de détection en parallèle opérant à 200 grains/s permettra d'atteindre un débit de 1000 grains/s.

### La détermination de la teneur en contaminant

Le système LIBS mesure l'intensité du pic (des pics) relatif(s) au contaminant. L'exploitant choisit une valeur du seuil de tri comprise dans les valeurs indiquées précédemment, ou supérieurs, selon ses besoins en tri.

L'analyse spectrométrique à la ou les longueur(s) d'onde considérée(s) permet(ent) de remonter à la concentration massique du contaminant sur l'adsorbant ou le catalyseur grâce à une calibration préalable

Selon la calibration que fait l'opérateur, la valeur consigne (correspondant à la présence de contaminant ou au seuil de tri) est entrée dans le système LIBS. Ce peut être est une teneur ou toute autre valeur reliée de manière significative à la teneur (ce peut être l'intensité du pic...), toutes ces techniques sont bien connues de l'homme du métier.

Après comparaison entre la valeur consigne et la valeur mesurée, le système agit pour évacuer le grain vers le stockage correspondant.

Il faut souligner que la présence d'un contaminant spécifique peut être corrélée à la teneur d'un autre contaminant. Cela constitue un avantage si l'un des deux contaminants est plus facilement détectable en LIBS, du fait d'une ou plusieurs raies plus émissives, ou encore du fait d'interférence d'un autre élément perturbant le signal d'un contaminant mais pas l'autre. Cela peut également être un choix délibéré lié à l'utilisation d'un spectrophotomètre dont la bande spectrale comporte les raies d'un contaminant et pas l'autre. Ainsi, la teneur en contaminant V sur le catalyseur peut être approximativement corrélée à la teneur en contaminant Ni dans le cas d'un procédé catalytique traitant une charge contenant du Ni et du V. La détection de la concentration en V sur le catalyseur permet donc par corrélation d'accéder à la teneur en Ni et de faire également un tri en fonction de la teneur en Ni.

De même, dans certains cas, une contamination au V peut être associée à une contamination au Na. Cela peut également être un choix délibéré de trier sur la base de l'élément Na, dont le signal est éventuellement plus sensible que celui du V.

### La séparation des grains

Lorsque le système de détection LIBS détecte le contaminant dans un ou des grains et, de préférence détermine également l'état du grain par rapport au seuil de tri, il envoie un signal vers un moyen d'évacuation de ce grain à séparer de façon à séparer ledit grain dudit mélange.

Le système de détection est relié à un système de commande des moyens d'évacuation des grains contenant le contaminant caractéristique recherché (tel que sodium par exemple). Ces moyens sont localisés au niveau du moyen de transport (tapis roulant...), et le plus souvent ils sont situés à l'extrémité aval (sortie) du moyen de transport.

Ces moyens sont actionnés avec un décalage temporel fonction de leur distance avec le système de détection. Un exemple de moyen d'évacuation permettant de diriger les grains dans différentes directions est l'utilisation d'air comprimé. Le jet d'air comprimé ou l'absence de jet d'air comprimé permet de diriger le grain vers les différentes classes de tri, par exemple les grains contenant plus de X% d'un contaminant évacués vers le haut alors que les grains contenant moins de X% du contaminant sont évacués vers le bas.

Par exemple, si le grain de catalyseur ou d'adsorbant contient le contaminant recherché à une teneur supérieure au seuil de tri fixé par l'opérateur (0.25% par exemple pour le sodium), alors les moyens sont actionnés et permettent une déviation de l'écoulement du grain vers un réceptacle A. Si, au contraire, le catalyseur ou l'adsorbant contient le contaminant à une teneur inférieure au seuil de tri fixé par l'opérateur (0.25% par exemple pour le Na), alors les moyens ne sont pas actionnés et le catalyseur s'écoule normalement vers un autre réceptacle B.

Dans le cas où l'on souhaite trier les catalyseurs ou adsorbants en fonction de plusieurs teneurs en différents contaminants, on dispose avantageusement plusieurs systèmes de détection LIBS, chacun ayant une longueur d'onde adaptée à l'élément caractéristique à séparer. Les moyens d'évacuation sont adaptés en fonction.

On ne détaillera pas ici les multiples possibilités de tri, les tris peuvent être multiples en présence de plusieurs détecteurs LIBS. L'homme du métier adaptera le procédé selon l'invention en fonction de ses besoins.

L'invention peut être mise en oeuvre avec un dispositif de séparation d'au moins un catalyseur et/ou adsorbant d'un mélange homogène de catalyseurs et/ou d'adsorbants, lesdits catalyseurs ou adsorbants contenant un ou des contaminant(s) métallique(s), semi-métallique(s) ou non métallique(s) déposé(s) sur lesdits grains de catalyseurs ou adsorbants, le dispositif de séparation et de tri permettant de séparer les catalyseurs ou les adsorbants selon un seuil de tri correspondant à une teneur en contaminant et défini par l'exploitant, ledit dispositif comprenant :
- une chaîne de transport du mélange de catalyseurs munie d'un moyen de transport, de moyen de contrôle du débit d'écoulement des grains sur ledit moyen et de moyen de contrôle de sa vitesse, lesdits moyens étant réglés de façon à ce que le temps de passage d'un grain devant le moyen de détection LIBS soit inférieur à 50ms, et de préférence inférieur à 10ms et que le nombre de grains triés soit d'au moins 20 grains/s, préférentiellement au moins 100 grain/s et de façon encore plus préférée d'au moins 200 grains/s,
- un système de détection LIBS comportant au moins un laser devant lequel les grains passent, le temps de détection étant inférieur à 50 ms, et de préférence inférieur à 10ms et la longueur d'onde étant celle du contaminant recherché, ledit système détectant le grain chargé en ledit contaminant et mesurant l'intensité du pic associé à ladite longueur d'onde,
- au moins un analyseur (8) et au moins un moyen de commande (10), ledit analyseur traitant le signal envoyé par le détecteur en le comparant à une valeur consigne significative du seuil de tri,
- au moins un moyen d'évacuation des grains à séparer, le(s)dit(s) moyen(s) étant actionné(s) à partir dudit moyen de commande selon la teneur en ledit contaminant recherché.

Des moyens classiques de convoyage (tube vibrant, élévateur vibrant, etc.) et de stockage de grains à trier puis de grains triés peuvent être utilisés à différents endroits du procédé de tri.

Avantageusement, le moyen de transport est une bande de roulement (ou tapis roulant). Ce peut aussi être une filière munie d'une vis sans fin creusée en son axe et munie d'au moins une ouverture adaptée à la détection et d'au moins une ouverture adaptée à la séparation des grains de catalyseur. Ce moyen de transport peut également être un tapis ou un tube vibrant.

De préférence, le moyen de transport est un tapis roulant et de préférence crénelé, la profondeur des créneaux étant comprise entre 0,5 et 3, et de préférence 0.7 et 1.3 fois la plus petite dimension caractéristique des grains, correspondant au diamètre dans le cas d'une sphère ou d'un extrudé.

De façon préférée, le réglage desdits moyens de la chaîne de transport est effectué de façon à ce que les grains s'écoulent avec un espacement compris entre zéro et leur plus grande dimension caractéristique, la fréquence de mesure est comprise entre 1/t et 1/2t, t étant le temps de passage du grain devant le système de détection LIBS.

Les grains sont de préférence des extrudés cylindriques, des trilobes ou multilobes.

Lorsque les grains sont espacés de leur longueur moyenne, la fréquence de mesure est égale à 1/2t, t étant le temps de passage du grain devant le système de détection. Lorsque les grains s'écoulent de façon jointive (les grains sont jointifs, leur espacement est égal à zéro), la fréquence est égale à 1/t.

Ce type de dispositif de mise en oeuvre de l'invention est particulièrement bien adapté pour mettre en œuvre le procédé de l'invention.

Avantageusement, le système de détection est placé de façon à ce que la profondeur du champ d'analyse au-dessus de la surface des moyens de transport soit comprise entre 1/3 et 3 fois la plus petite dimension caractéristique du grain.

Avantageusement, le temps de passage d'un grain devant le système de détection LIBS est inférieur à 50 ms, et de préférence inférieur à 10 ms, les analyses étant répétées à intervalle de temps au plus égal au temps de passage du grain de plus petite dimension caractéristique.

### Description détaillée du procédé et du dispositif de séparation:

Les grains de catalyseur ou d'adsorbant initialement stockés dans des fûts, des containers, des silos ou dans des sacs puis sont généralement transférés dans une capacité tampon, par exemple une trémie, cette capacité alimentant une chaîne de transport qui comporte avantageusement une bande de déroulement comme un tapis roulant ou tube ou couloir vibrant, et qui comporte des moyens de contrôle du débit d'écoulement des grains sur la bande de roulement.

Les grains transportés passent devant le système d'analyse qualitative et quantitative LIBS de la teneur en contaminant permettant de la présence de contaminant, et de préférence de déterminer si les grains ont une teneur inférieure ou supérieure en contaminant par rapport à un ou plusieurs seuils de tri défini par l'opérateur. Il peut y avoir un ou plusieurs seuils pour chaque contaminant selon les besoins de l'opérateur.
La figure 1 reprend de manière illustrative un mode de réalisation préféré.
La figure 2 représente un tapis crénelé.
La figure 3 montre des formes de grains.

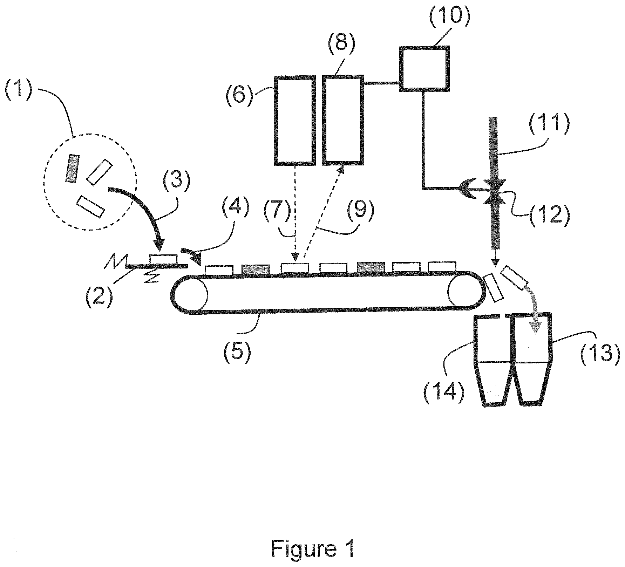

La figure 1 reprend de manière illustrative un mode de réalisation préféré mais non limitant du procédé faisant l'objet de la présente invention.

Le mélange de grains de catalyseurs ou d'adsorbants non trié (1) est amené sur un moyen (2) permettant de contrôler le débit d'écoulement des grains sur la bande de roulement (5). Les moyens d'amenée du mélange (3) peuvent être manuels (déchargement de sac par exemple) ou automatique (par décharge contrôlée d'un silo par exemple).

On décrit l'invention avec comme moyen de transport une bande de roulement mais la description est tout à fait transposable avec un autre moyen de transport, tel que par exemple le couloir vibrant décrit précédemment.

Les moyens permettant de contrôler le débit sont des moyens bien connus de l'homme du métier, comme par exemple des plateaux vibrants inclinés, permettant l'étalement uniforme du grain de catalyseur et d'ajuster le débit d'écoulement du catalyseur sur le plateau vers la bande de roulement L'homme du métier peut ainsi régler la distance entre deux grains sur la chaîne de transport et ajuster les fréquences de détection en conséquence ou bien, inversement, il peut régler la distance en fonction des fréquences de détection.

A titre d'exemple, sur la figure 1, nous avons représenté en (2) un plateau vibrant dans deux directions orthogonales. Avec ce type d'équipement, il est possible d'ajuster les fréquences de vibration pour moduler le débit de solide (4) vers la bande de roulement (5), ajuster la répartition entre les grains sur la section de passage et ainsi de contrôler l'espacement entre les grains en fonction de la vitesse de déplacement de la bande.

De préférence, de manière optimale, on règlera le dispositif pour que la distance entre les grains soit au maximum égale à la longueur moyenne des grains.

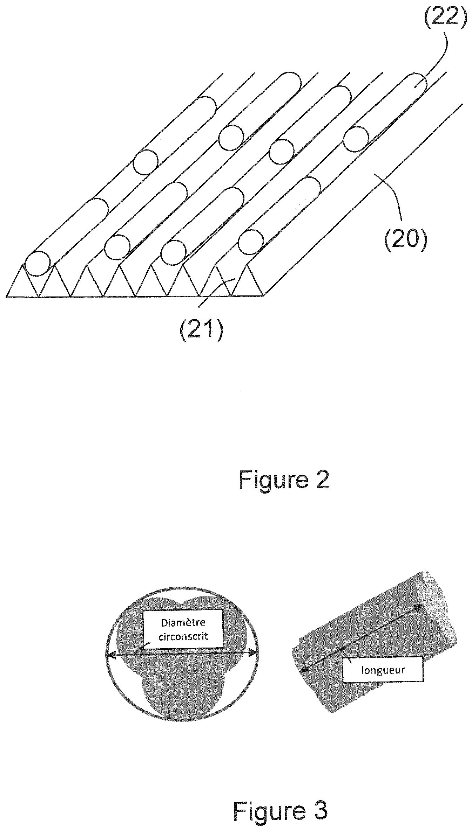

En sortie des moyens de contrôle de débit (2), les grains tombent sur la bande de roulement, qui peut être un simple tapis roulant plat, ou un tapis crénelé, tel que représenté sur la Figure 2.

Le tapis crénelé de la figure 2 présente un intérêt manifeste lorsqu'on trie notamment des extrudés en ce qu'il permet, de manière avantageuse, d'orienter les grains dans le sens de l'écoulement. L'écoulement des grains est ainsi plus régulier et espacé, ce qui favorise la détection, la séparation et améliore la productivité de l'installation. D'une façon générale, quelle que soit la forme du grain, le tapis crénelé évite que le grain bouge sous l'effet des vibrations du tapis et/ou impulsions du laser.

Dans le cas d'un tapis crénelé (20), une forme de créneau (21) ayant la forme d'un triangle équilatéral tel que représenté sur la figure 2 est avantageuse; la profondeur des créneaux sur le tapis est alors idéalement comprise entre 0.7 fois et 1.3 fois la plus grande dimension caractéristique des grains, le diamètre des grains de catalyseur dans le cas des billes, la longueur moyenne dans le cas d'extrudés cylindriques ou trilobes ou multilobes.

Les grains (22) sont positionnés sur le tapis (20). La vitesse d'avancement du tapis est ajustée afin d'optimiser la capacité de production d'une part, et la capacité du système à détecter le contaminant recherché dans les grains de catalyseur.

On cherchera préférentiellement à ce que le temps de passage d'un grain soit inférieur à 50ms, et étant de préférence inférieur à 10ms. Plus généralement, le temps de passage est le plus faible possible en accord avec le temps de réponse du système de détection.

Dans ces conditions, par exemple, pour un extrudé cylindrique de longueur égale à 5 mm, la vitesse est préférentiellement comprise entre 0.1 et 5 m/s.

Le système de détection comprend au moins un laser (6), au moins un spectromètre (ou analyseur) (8) et au moins un moyen de commande (10) de l'ouverture ou non d'au moins un moyen d'évacuation.

Un laser (6) émet un rayonnement focalisé sur la surface de l'échantillon (7). Suite à l'impulsion de l'ordre de la femto- à la nanoseconde entre le laser et l'échantillon, un plasma nourrit par la composition de l'échantillon est généré et renvoie en quelques millisecondes des longueurs d'onde propres à la composition de l'échantillon (9).

Les émissions de l'échantillon (9) sont analysées par un spectromètre (8) aux longueurs d'onde spécifiques du contaminant devant être détecté. De façon optionnelle, au moins une fibre optique est utilisée entre le plasma et le spectrophotomètre. Il est possible de travailler à plusieurs longueurs d'onde simultanément en positionnant sur le faisceau lumineux plusieurs spectromètres en parallèle qui travaillent simultanément à des longueurs d'onde différentes

Par exemple, pour mesurer la teneur en sodium dans les catalyseurs d'hydrocraquage ou d'hydrotraitement, on utilisera la longueur d'onde à 588.995 ou 589.592 nm pour son intensité importante. Les raies à 818.326 nm ou 819.482 nm sont également utilisables. Ces quatre raies permettent de détecter la présence de sodium en minimisant les interférences avec Ni, Co, Mo, Al, W ou Si.

En fonction des besoins, il est possible d'analyser l'ensemble des grains passant devant le système de détection (6-7-8-9) sur la bande de roulement (5), globalement ou individuellement, en utilisant plusieurs systèmes laser (6) en parallèle de façon à couvrir la largeur de la bande et en adaptant ou en découplant également le laser et le spectromètre (8) analysant les émissions (9).

Il est également possible de choisir d'opérer statistiquement, en analysant seulement une fraction de l'écoulement, ou de considérer un déplacement sur la largeur des lasers (6) et du (des) spectromètre(s) (8).

L'analyseur (le spectromètre) (8) est relié à des moyens de commande (10) permettant de convertir les résultats de l'analyse en action pour agir sur ledit moyen d'évacuation (ici la vanne 12).

Ces moyens sont par exemple constitués d'un ordinateur permettant de déclencher l'ouverture d'une vanne (12).

Ainsi, par exemple lorsque l'analyseur (8) détecte que le grain a une teneur supérieure à la valeur consigne (par exemple au seuil de tri en contaminant), il envoie un signal au moyen de commande (10) qui actionne l'ouverture de la vanne (12).

Celle-ci est située sur une canalisation de fluide inerte (air par ex) sous une pression si possible supérieure à 5 bars (préférentiellement de l'air) pour favoriser la création d'un jet de gaz (d'air) suffisant pour évacuer le grain.

La vanne (12) s'ouvre pendant une durée déterminée DT1 puis se referme automatiquement. L'ouverture de la vanne permet de générer un jet à l'extrémité inférieure de la canalisation (11). Elle agit avec la canalisation comme une buse d'éjection de gaz (air). Avantageusement, la canalisation (11) est positionnée au bout du tapis roulant à une distance d'au plus 10 cm de l'extrémité du tapis (en fonction de la vitesse d'avancement du tapis, plus la vitesse de déroulement du tapis est faible et plus on rapproche la canalisation (11) de l'extrémité du tapis), à une hauteur au-dessus du tapis (5) comprise préférentiellement entre 2 et 10 fois la à la plus grande dimension caractéristique du grain de catalyseur (sa longueur dans le cas d'un extrudé).

Il est possible de positionner une ou plusieurs canalisations (11) en parallèle en fonction de la largeur de la bande de transport et de la forme de l'extrémité de la canalisation.

Dans le cas d'un embout de canalisation sphérique, le diamètre de l'embout de la canalisation est préférentiellement inférieur ou égal à la longueur moyenne des grains.

Si le tapis permet le passage simultané dans la largeur de N particules simultanément, on peut positionner jusqu'à N tubes (11) en parallèles possédant chacun leur vanne, les vannes étant commandées simultanément ou séparément par le(s) moyen(s) de commande (10) en fonction du nombre d'analyseurs utilisés en parallèle.

Il est également possible de travailler avec une canalisation (11) unique mais dont l'extrémité de section rectangulaire pourrait créer un jet de gaz en pinceau, l'épaisseur du jet étant alors préférentiellement inférieure ou égal à la longueur moyenne des grains.

Afin de prendre en compte la distance entre les moyens de détection et les moyens d'évacuation, le système de commande déclenche les cycles d'ouverture fermeture avec un retard qui est fonction de la distance à parcourir entre ces deux points. Par exemple, si la longueur de tapis entre la position focale de l'analyseur sur le tapis (9) et le(s) moyen(s) d'évacuation (vanne, buse d'injection d'air (12)) est de 3 m et que la vitesse de défilement sur le tapis est de 3m/s, un retard d'une seconde est à prendre en compte, à corriger éventuellement en fonction des temps de réponse de l'analyseur (8), du moyen de commande (10) ou de la vanne (12).

Pour les besoins de l'invention et pour être sélectif, le cycle d'ouverture-fermeture de la vanne doit être rapide et cohérent avec le temps de passage des grains devant le détecteur. Préférentiellement, le temps de cycle ouverture fermeture n'excédera pas 1 et 5 fois le temps de passage du grain devant les moyens de détection, préférentiellement moins de 3 fois ce temps de passage moyen.

Ainsi, on choisira les technologies de vannes et d'actionneurs afin d'avoir un cycle ouverture fermeture compris entre 5 et 250 ms en fonction de la vitesse de défilement des moyens de transport (5).

Le jet de gaz (par ex air) créé pendant cette période a une vitesse au moins égale à 5 fois la vitesse terminale de chute du grain, préférentiellement 10 fois la vitesse terminale de chute (dans le cas d'un extrudé d'hydrotraitement, la vitesse terminale de chute est en général voisine de 5m/s et comprise entre 2 et 7 m/s

Lorsque l'actionneur déclenche l'ouverture de la vanne, le jet de gaz dévie la trajectoire du grain vers un réceptacle (14) qui récolte tous les grains dans la teneur en contaminant est supérieure au seuil de tri définie par l'opérateur.

Si l'actionneur n'est pas déclenché, alors, la trajectoire du grain sortant du tapis roulant décrit une parabole normale en fonction de la vitesse de déroulement du tapis et de la vitesse terminale de chute des particules. Le grain tombe alors dans un réceptacle (13) qui récolte tous les grains à éliminer ne contenant pas l'élément non désiré.

Ainsi les grains collectés en (13) constitueront un nouveau lot ayant par exemple une teneur en contaminants inférieure au seuil de tri défini par l'opérateur.

Par rapport à l'art antérieur, l'invention permet un tri rapide en fonction de la teneur en contaminant(s), d'au moins 20 à 100 objets (grains de catalyseur) /seconde, en général d'au moins 50 voire 100 objets/seconde, ou même au-delà de 100 objets/s et son utilisation autorise jusqu'à 1000 objets/seconde ou plus. La technique LIBS permet donc à elle seule une productivité importante.

Un autre avantage de l'invention est de pouvoir être mise en œuvre dans l'air ou tout autre atmosphère (n'interagissant pas sur la détection ou les grains).

### Exemple 1

Tri d'un lot de mélange de catalyseurs d'hydrotraitement contenant du Ni et Mo et une contamination en Na :
120 grains de catalyseurs d'un lot de catalyseurs ont été analysés par LIBS à partir d'un lot de 3 g ayant initialement été analysés par fluorescence X (Panalytical PW2404, tube Rh). Les teneurs moyennes de l'analyse élémentaire par fluorescence X sont données dans la tableau 1.

**Tableau 1 :**

| V (wt%) | Fe (wt%) | Na (wt%) | Ni (wt%) | Mo (wt%) |
|---|---|---|---|---|
| 0,16 | 0,31 | 0,31 | 2,90 | 13,9 |

Un appareil LIBS de laboratoire (MobiLIBS III, IVEA) a été employé pour cet essai, il est composé d'un laser (Brio, Quantel, Nd-YAG à 532 nm) et d'un spectromètre (Mechelle Andor, 200-900nm). L'appareil a été utilisé en mode tir unique et chaque grain de catalyseur a été analysé dans les conditions suivantes : 12 mJ / spot de 140 µm / 3-5 ns de temps d'impulsion.

A partir du nombre de coups mesuré sur le spectromètre sur les différentes raies du Na (raies à 588.995, 589.592, 818.326 et 819.482 nm), les 120 grains de catalyseur ont été triés en trois familles. Les grains de catalyseurs présentant moins de 60000 coups, ceux entre 60000 et 120000 coups et ceux avec un nombre de coups supérieur à 120000.

0.57 g de grains ayant un signal présentant moins de 60000 coups ont été collectés, alors que 0.53 g de grains ayant un signal entre 60000 et 120000 coups ont été récupérés. 0.03 g de grains ayant un signal avec un nombre de coups supérieur à 120000 ont été observés.

Le lot de grains de 0.57 g et de 0.53 g étant suffisant pour effectuer une analyse de Na par spectrométrie d'absorption atomique (Agilent SpectrAA 240 FS) après minéralisation (0.2g d'échantillon + 2 ml HClO4 70%+ 4 ml HF 40%). La teneur en Na mesuré sur le lot de 0.57 g et présentant un signal LIBS avec moins de 60000 coups était de 0.14% Na alors que le lot de 0.53 g et présentant un signal LIBS entre 60000 et 120000 coups était de 0.28% Na. Cet essai confirme qu'un tri sur les grains individuels est possible grâce à la technique LIBS.

### Exemple 2

Tri d'un lot de mélange de catalyseurs d'hydrotraitement de résidu avec un seuil pour le vanadium à 1%.

De la même façon que l'exemple précédent, 50 grains de deux familles de catalyseurs (cat 1 et cat 2) ayant des teneurs en vanadium différentes ont été soumis à l'analyse LIBS. Les caractéristiques des catalyseurs en termes de composition chimique obtenus par fluorescence X (Panalytical PW2404, tube Rh) sont données dans la tableau 2 :

**Tableau 2 :**

| | V (wt%) | Fe (wt%) | Na (wt%) | Ni (wt%) | Co (wt%) | Mo (wt%) |
|---|---|---|---|---|---|---|
| Cat 1 | 0,45 | 0,14 | 0,15 | 0,79 | 2,22 | 11,0 |
| Cat 3 | 1,73 | 0,24 | 0,35 | 1,13 | 2,17 | 11,3 |

Le système LIBS utilisé est équipé d'un laser (Quantel, Centurion, 1064 nm, 100 Hz) et de deux spectromètres à forte fréquence d'acquisition (HR2000+, grating à 1800 traits/mm, résolution de 0.11 nm pour la zone 554-663 nm / HR2000+, grating à 2400 traits/mm, résolution de 0.09 nm pour la zone 298-395 nm). La valeur moyenne du signal LIBS, sur les 50 grains de la famille Cat 1 contenant en moyenne 0.45% en V, est de 4000 coups sur la raie à 609.022 nm contre 29000 coups sur la raie à 309.311 nm. La même expérience menée sur les 50 grains de la famille Cat 3, contenant en moyenne 1.7% en V, donne des valeurs moyennes de 10000 coups sur la raie à 609.022 nm contre 48000 coups sur la raie à 309.311 nm. Le signal mesuré sur la raie à 609.022 nm est en moyenne 2.5 fois plus élevé sur les cinquante grains mesurés du lot contenant 1.73% en V par rapport au lot ne contenant que 0.45% en V. Le même calcul effectué sur la raie à 309.311 nm montre un signal moyen 1.6 fois plus élevé pour le lot contenant 1.73% en V par rapport au lot ne contenant que 0.45% en V. Dans les deux cas, la technique LIBS permet donc bien de différencier un lot de catalyseurs contenant plus ou moins de 1% de V en contaminant.

### Exemple 3

Tri d'un lot de mélange de catalyseurs utilisé en lit de garde sur le reformeur et contaminé en S à hauteur de 2% :
50 grains de catalyseurs d'un lot de catalyseurs en lit de garde ont été analysés par LIBS pour déterminer leur teneur en S et décider si ces grains devaient être recyclés ou éliminés. Le système LIBS utilisé pour ces essais est équipé d'un laser (Quantel, Centurion, 1064 nm, 100 Hz) et d'un spectromètre centré sur la région 578 à 1011 nm (HR2000+, grating à 600 traits/mm). Les raies du S à une longueur d'onde de 921.287 ou 922.809 nm sont utilisées pour cette détection du S et un faible signal est détecté sur les grains de catalyseurs analysés. A partir du nombre de coups mesuré sur la raie à 921.287 nm, un tri est effectué sur les grains individuels : les grains présentant un signal supérieur à 500 coups sont éjectés alors que les grains présentant un signal inférieur à 500 coups sont conservés.

Sur les 50 grains initiaux, 13 grains ont été éjectés. Malgré la faible quantité de matière, une analyse semi-quantitative par fluorescence X (Uniquant, Thermo Perform'X, tube Rh) en déposant les grains dans une cellule de mesure (XRF samples cells, Fluxana SC-3340, 40 mm, film en polypropylène 6 µm) a été pratiquée. La teneur moyenne et semi-quantitative mesurée sur les grains éjectés est de 4.3% S alors qu'une analyse effectuée sur le lot des 37 grains conservés montre une valeur de 1.2% en S. Le tri effectué sur la base de la détection du S à la longueur d'onde de 921.287 nm est donc efficace pour séparer les grains de catalyseurs en lit de garde contaminé ou non par le S à hauteur de 2%.

## Revendications

1. Procédé de séparation d'au moins un catalyseur et/ou adsorbant d'un mélange homogène de catalyseurs et/ou d'adsorbants qui sont des catalyseurs ou adsorbants usés, n'ayant pas encore subi de traitement de régénération, lesdits catalyseurs et/ou adsorbants se présentant sous la forme de billes ou d'extrudés cylindriques, trilobes ou multilobes, lesdits catalyseurs ou adsorbants contenant un ou des contaminant(s) métallique(s), semi-métallique(s) ou non métallique(s) choisi dans le groupe formé par Fe, Hg, Ni, V, C, Cl, Na, S, N, Si, P, As , ledit (lesdits) contaminant(s) étant déposé(s) sur lesdits grains de catalyseurs ou adsorbants, procédé dans lequel les grains de catalyseurs ou adsorbants sont séparés selon un seuil de tri correspondant à une teneur en contaminant et défini par l'exploitant, procédé dans lequel
- les grains de catalyseur dudit mélange passent devant un système de détection LIBS qui détecte la longueur d'onde caractérisant ledit contaminant,
- l'analyseur associé au LIBS traite le signal envoyé par le système de détection en le comparant à une valeur consigne significative du seuil de tri,
- l'analyseur envoie un signal pour commander l'évacuation des grains selon sa teneur en contaminant et il est obtenu au moins 2 lots, au moins un lot de catalyseurs ou adsorbants contenant le contaminant à une teneur supérieure au seuil de tri fixé par l'opérateur, et au moins un lot de catalyseurs ou adsorbants contenant le contaminant à une teneur inférieure au seuil de tri fixé par l'opérateur,
- les catalyseurs contenant le contaminant à une teneur inférieure au seuil de tri fixé par l'opérateur sont traités avant d'être réutilisés dans un procédé industriel,
- et les catalyseurs contenant le contaminant à une teneur supérieure au seuil de tri fixé par l'opérateur sont traités en recyclage ultime pour récupérer les constituants valorisables.

2. Procédé selon la revendication 1 dans lequel le tri s'effectue dès lors la présence dudit contaminant sur lesdits grains de catalyseurs ou adsorbants.

3. Procédé selon l'une des revendications précédentes, dans lequel pour le contaminant Na, le seuil de tri est 0,3% pds, les grains contenant moins de 0,3% pds étant séparés et étant réutilisés.

4. Procédé selon l'une des revendications précédentes, dans lequel pour le contaminant V, le seuil de tri est 12% pds, les grains de catalyseur contenant 12% pds ou plus étant séparés et étant traités en recyclage ultime pour récupérer les éléments valorisables.

5. Procédé selon l'une des revendications précédentes, dans lequel pour le contaminant V, le seuil de tri est 2% pds, les grains de catalyseur contenant moins de 2% pds étant séparés et réutilisés.

6. Procédé selon l'une des revendications précédentes, dans lequel pour le contaminant S, le seuil de tri est 2% pds, les grains contenant moins de 2% pds étant séparés et étant réutilisés.

7. Procédé selon l'une des revendications précédentes, dans lequel pour le contaminant As, le seuil de tri est 1% pds, les grains contenant moins de 1% pds étant séparés et étant réutilisés.

8. Procédé selon l'une des revendications précédentes, dans lequel le temps de passage d'un grain devant le système de détection LIBS est inférieur à 50ms, le nombre de grains détectés/analysés étant d'au moins 20 par seconde.

9. Procédé selon la revendication 8, dans lequel le temps de passage d'un grain devant le système de détection LIBS est inférieur à 10 ms.

10. Procédé la revendication 8, dans lequel le nombre de grains détectés et triés est d'au moins 100 grains par seconde.

11. Procédé selon l'une quelconque des revendications 1 à 10, dans lequel ledit mélange de catalyseurs et/ou adsorbants passe devant le système de détection LIBS par un moyen de transport qui est un tapis crénelé, la profondeur des créneaux étant comprise entre 0,5 et 3 fois le diamètre desdits catalyseurs ou adsorbants, ledit diamètre étant compris entre 0,5 et 3 mm lorsque lesdits catalyseurs ou adsorbants se présentent sous la forme d'extrudés cylindriques, trilobes ou multilobes, ou entre 0,5 et 5 mm lorsque lesdits catalyseurs ou adsorbants se présentent sous la forme de billes.

## Patentansprüche

1. Verfahren zur Trennung mindestens eines Katalysators und/oder Adsorbens eines homogenen Gemisches von Katalysatoren und/oder von Adsorbens, die gebrauchte Katalysatoren oder Adsorbens sind, die noch keiner Regenerationsbehandlung unterzogen wurden, wobei die Katalysatoren und/oder Adsorbens in Form von Kugeln oder zylindrischen Extrudaten, dreilappig oder mehrlappig, vorhanden sind, wobei die Katalysatoren oder Adsorbens ein oder mehrere metallische(n), semi-metallische(n) oder nicht metallische(n) Kontaminationsstoff(e) enthalten, ausgewählt in der Gruppe, die von Fe, Hg, Ni, V, C, Cl, Na, S, N, Si, P, As gebildet ist, wobei der(die) Kontaminationsstoff(e) auf den Katalysator- oder Adsorbens-Körnern abgelagert wird(werden), wobei bei dem Verfahren die Katalysator- oder Adsorbenskörner gemäß einen Sortiergrenzwert getrennt werden, der einem Gehalt an Kontaminationsstoff entspricht und durch den Bediener definiert wird, wobei bei dem Verfahren
- die Katalysatorkörner des Gemisches ein Erfassungssystem LIBS passieren, das die Wellenlänge erfasst, die den Kontaminationsstoff kennzeichnet,
- der dem LIBS zugeordnete Analysator das von dem Erfassungssystem gesandte Signal verarbeitet, wobei er es mit einem für den Sortiergrenzwert signifikanten Sollwert vergleicht,
- der Analysator ein Signal sendet, um die Beseitigung der Körner je nach Gehalt an Kontaminationsstoff zu steuern, und mindestens 2 Chargen erhalten werden, mindestens eine Charge von Katalysatoren oder Adsorbens, die den Kontaminationsstoff in einem Gehalt über dem vom Bediener festgesetzten Sortiergrenzwert enthält, und mindestens eine Charge von Katalysatoren oder Adsorbens, die den Kontaminationsstoff in einem Gehalt unter dem vom Bediener festgesetzten Sortiergrenzwert enthält,
- die Katalysatoren, die den Kontaminationsstoff in einem Gehalt unter dem vom Bediener festgesetzten Sortiergrenzwert enthalten, bearbeitet werden, bevor sie wieder in einem industriellen Verfahren verwendet werden,
- und die Katalysatoren, die den Kontaminationsstoff in einem Gehalt über dem vom Bediener festgesetzten Sortiergrenzwert enthalten, einem endgültigen Recycling zugeführt werden, um die verwertbaren Bestandteile wiederzugewinnen.

2. Verfahren nach Anspruch 1, bei dem das Sortieren erfolgt, wenn der Kontaminationsstoff auf den Katalysator- oder Adsorbenskörnern vorhanden ist.

3. Verfahren nach einem der vorhergehenden Ansprüche, bei dem für den Kontaminationsstoff Na der Sortiergrenzwert 0,3 Gew.-% beträgt, wobei die Körner, die weniger als 0,3 Gew.-% enthalten, getrennt und wieder verwendet werden.

4. Verfahren nach einem der vorhergehenden Ansprüche, bei dem für den Kontaminationsstoff V der Sortiergrenzwert 12 Gew.-% beträgt, wobei die Körner, die 12 Gew.-% oder mehr enthalten, einem endgültigen Recycling zugeführt werden, um die verwertbaren Bestandteile wiederzugewinnen.

5. Verfahren nach einem der vorhergehenden Ansprüche, bei dem für den Kontaminationsstoff V der Sortiergrenzwert 2 Gew.-% beträgt, wobei die Körner, die weniger als 2 Gew.-% enthalten, getrennt und wieder verwendet werden.

6. Verfahren nach einem der vorhergehenden Ansprüche, bei dem für den Kontaminationsstoff S der Sortiergrenzwert 2 Gew.-% beträgt, wobei die Körner, die weniger als 2 Gew.-% enthalten, getrennt und wieder verwendet werden.

7. Verfahren nach einem der vorhergehenden Ansprüche, bei dem für den Kontaminationsstoff As der Sortiergrenzwert 1 Gew.-% beträgt, wobei die Körner, die weniger als 1 Gew.-% enthalten, getrennt und wieder verwendet werden.

8. Verfahren nach einem der vorhergehenden Ansprüche, bei dem die Durchgangszeit eines Korns vor dem Erfassungssystem LIBS kürzer als 50 ms ist wobei die Anzahl von erfassten/analysierten Körnern weniger als 20 pro Sekunde ist.

9. Verfahren nach Anspruch 8, bei dem die Durchgangszeit eines Korns vor dem Erfassungssystem LIBS kürzer als 10 ms ist.

10. Verfahren nach Anspruch 8, bei dem die Anzahl von erfassten und sortierten Körnern mindestens 100 Körner pro Sekunde beträgt.

11. Verfahren nach einem der Ansprüche 1 bis 10, bei dem das Gemisch von Katalysatoren und/oder Adsorbens das Erfassungssystem LIBS durch ein Fördermittel, das ein gerilltes Band ist, passiert, wobei die Tiefe dieser Rillen zwischen 0,5- und 3-mal den Durchmesser der Katalysatoren oder Adsorbens darstellt, wobei der Durchmesser zwischen 0,5 und 3 mm beträgt, wenn die Katalysatoren oder Adsorbens in Form von zylindrischen, dreilappigen oder mehrlappigen Extrudaten vorhanden sind, oder zwischen 0,5 und 5 mm, wenn die Katalysatoren oder Adsorbens in Form von Kugeln vorhanden sind.

## Claims

1. Method for separation of at least one catalyst and/or adsorbent from a homogeneous mixture of catalysts and/or adsorbents that are spent catalysts or adsorbents that have not yet undergone regeneration treatment, said catalyst and/or adsorbent being in the form of cylindrical extrudates, balls, trilobes, or multilobes, with said catalysts or adsorbents containing one or more metal, semi-metal or non-metal contaminant(s) selected from the group that is formed by Fe, Hg, Ni, V, C, Cl, Na, S, N, Si, P, As, with said contaminant(s) being deposited on said catalyst or adsorbent grains, method in which the catalyst or adsorbent grains are separated according to a sorting threshold corresponding to a contaminant content and defined by the user, method in which
- The catalyst grains of said mixture run past an LIBS detection system that detects the wavelength that characterizes said contaminant,
- The analyzing device associated with LIBS processes the signal that is sent by the detection system by comparing it to a set-point value that indicates the sorting threshold,
- The analyzing device sends a signal for ordering the evacuation of grains according to its contaminant content, and at least 2 batches - at least one batch of catalysts or adsorbents containing the contaminant at a level above the sorting threshold set by the operator and at least one batch of catalysts or adsorbents containing the contaminant at a level below the sorting threshold set by the operator,
- and the catalysts containing the contaminant at a level below the sorting threshold set by the operator are treated before being reused in an industrial method,
- and the catalysts containing the contaminant at a level above the sorting threshold set by the operator are treated in final recycling to recover the upgradable components.

2. Method according to Claim 1, in which the sorting is carried out therefore the presence of the contaminant on the catalyst grains or adsorbent.

3. Method according to one of the preceding claims, in which for the Na contaminant, the sorting threshold is 0.3% by weight, with the grains containing less than 0.3% by weight being separated and being reused.

4. Method according to one of the preceding claims, in which for the V contaminant, the sorting threshold is 12% by weight, with the catalyst grains containing 12% by weight or more being separated and being treated in final recycling to recover the upgradable elements.

5. Method according to one of the preceding claims, in which for the V contaminant, the sorting threshold is 2% by weight, with the catalyst grains containing less than 2% by weight being separated and reused.

6. Method according to one of the preceding claims, in which for the S contaminant, the sorting threshold is 2% by weight, with the grains containing less than 2% by weight being separated and being reused.

7. Method according to one of the preceding claims, in which for the As contaminant, the sorting threshold is 1% by weight, with the grains containing less than 1% by weight being separated and being reused.

8. Method according to one of the preceding claims, in which the dwell time of a grain in front of the LIBS detection system is less than 50 ms, with the number of detected/analyzed grains being at least 20 per second.

9. A method according to claim 8, wherein the dwell time of a grain in front of the LIBS detection system is less than 10 ms.

10. A method of claim 8, wherein the number of grains detected and sorted is at least 100 grains per second.

11. A process according to any of claims 1 to 10, wherein said mixture of catalysts and/or adsorbents passes in front of the LIBS detection system through a transport means that is a crenelated belt, with the depth of the gaps being between 0.5 and 3 times the diameter of said catalysts or adsorbents, said diameter being between 0.5 and 3 mm when said catalysts or adsorbents are in the form of cylindrical, trilobal or multilobal extrudates, or between 0.5 and 5 mm when said catalysts or adsorbents are in the form of beads.
